# EUROPEAN PATENT SPECIFICATION

(11) **EP 4 551 531 B1**
(45) Date of publication and mention of the grant of the patent: **12.08.2026**
(21) Application number: 23732632.7
(22) Date of filing: 19.06.2023
(51) Int. Cl.: C03B 5/03, C03B 5/04, C03B 5/235, C03C 1/00, F27D 17/00

(54) **GLASS MELTING PROCESS WITH VERY LOW TO ZERO-CO2 EMISSION**
GLASSCHMELZVERFAHREN MIT SEHR GERINGEN BIS KEINEN CO2-EMISSIONEN
PROCÉDÉ DE FUSION DE VERRE AVEC DES ÉMISSIONS DE CO2 TRÈS FAIBLES À NULLES

(30) Priority: 06.07.2022 EP 22183454
(43) Date of publication of application: 14.05.2025
(73) Proprietor: AGC Glass Europe, 1348 Louvain-La-Neuve (BE)
(72) Inventor: BIOUL, François, 6041 Gosselies (BE); SYMOENS, Bruno, 6041 Gosselies (BE); BOURGEOIS, Nicolas, 6041 Gosselies (BE); HABIBI, Zakaria, 6041 Gosselies (BE); FASILOW, Fabrice, 6041 Gosselies (BE)
(74) Representative: AGC Glass Europe
(86) International application number: PCT/EP2023/066396
(87) International publication number: WO 2024/008420

(56) References cited:
- EP-A2- 0 761 287
- WO-A1-2020/229559
- CN-A- 114 409 227

## Description

### FIELD OF THE INVENTION

The present invention relates to a glass melting process aimed at continuously supplying molten glass to flat glass forming installations such as float or rolling installations. In particular, the present invention relates to a glass melting process that provides a lot of advantages, especially in terms of CO₂, especially its emissions and capture.

The invention is more particularly related, but not limited, to melting process for flat glass involving large production capacities, i.e. up to 1000 tons/day or more.

### BACKGROUND OF THE INVENTION

WO2020229559 A1 discloses a furnace for melting vitrifiable materials including a melting tank having an upstream zone having the height h, a downstream zone having the height H, whereby h is less than 50% of H and the lenght of the upstream zone is at least 40% of the combined lengths of the upstream and the downstream zones. The opening for exhausting flue gases is in the upstream zone. The upstream zone is heated electrically, while the downstream zone and the fining zone following afterwards include oxy-fuel burners. The electrical input fraction of the furnace may be 41% and the cullet content in the batch may be 50%.

EP0761287 A2 teaches the capture of CO2 from waste gases originating from a glass melting furnace by dehydration.

CN114409227 A discloses the partial separation of the melting from the fining tank.

The global warming and the requirements for CO₂ emissions reduction increase the pressure on glass manufacturers, as well as the energy prices and CO₂ taxes that could become soon a severe threat on competitiveness in the glass sector.

In that context of urgent action to reduce carbon emissions, the glass industry has invested a lot since years in the decarbonization of its manufacturing processes, with the view to produce glass goods that are fit for a sustainable, resource-efficient, low-carbon society.

For enabling the transition, the glass sector has already identified a number of solutions/technologies to approach that ambitious goal, as, for example, use of electricity as energy source, use of alternative and greener sources of energy like H₂ or biogas, use of alternative raw materials, increase use of cullet as raw materials, heat recovery, CO₂ capture utilization and storage (or CCUS),...

Nevertheless, all these technologies are either accompanied by severe drawbacks or issues to practical implementation or are not viable from an economical point of view. There is therefore still an urgent need to have a glass melting process that allows to decrease drastically the amount of CO₂ emitted but while staying economically acceptable for glass manufacturers.

*As to the use of electricity* as source of energy:
It is known that furnace using electrical energy to melt the glass raw materials show a decrease of CO₂ emissions but also a decrease of total energy consumption. Glass melting furnaces where the heating power is entirely supplied by electricity are known and have been developed, even if they are well proven only for small capacities, i.e. below 300 tons/day (upscaling above 600 tons/day remains to be developed).

By opposition to classical combustion furnace called "hot-top furnaces" (or "warm-top"), these furnaces are also called "cold-top furnaces" because the raw materials are distributed over the glass melting surface forming an insulating batch "blanket" causing the temperature to drop from ^{~}1400°C in the glass melt to < 500°C (and possibly down to 50°C) at the blanket and above. All-electric furnaces offer significant advantages. First, they have very low direct emissions of CO₂, thermal NOₓ or SOₓ emissions.

Moreover, heat losses in all-electric furnaces are much lower as the melting energy is transferred essentially into the glass (e.g. thanks to electrodes allowing an electric current to pass through and heat the bath of molten glass from its bulk), which makes them energy-efficient furnaces, e.g. compared to warm-top combustion furnace where there is a significant heat loss occurring from the superstructure of the furnace and in the residual waste gases, even if heat recovery system is used. Unfortunately, all-electric furnaces show also some disadvantages in comparison with combustion hot-top furnaces. In particular, in such furnaces:
- the glass quality does not reach typical flat glass specifications, especially in term of small bubble density; and
- the very high temperature of the bottom, where the electrodes are located, (e.g. > 1400°C) causes a significant decrease of the furnace lifetime due to accelerated corrosion of the bottom refractories and the walls of the glass tank (typically from more than 15 years for conventional furnaces to less than 8 years and sometimes 2-7 years).

Moreover, surface melting rate of cold-top all-electrical furnace, namely the amount of glass molten from raw materials per unit time and per unit of furnace area (expressed in T/d/m²), is a direct function of glass temperature. In order to reach an acceptable surface melting rate (around 2-3 T/d/m²) for such furnaces, it is necessary to target a glass temperature above 1400°C, or even above 1450°C, thereby impacting further negatively furnace lifetime. For comparison, surface melting rate on a classical combustion furnace is typically around 5 T/d/m². Alternatively, targeting a lower surface melting rate, to avoid as much as possible impacting furnace lifetime, would imply to significantly increase the melting area and consequently, will have a great negative impact on the required investments and on occupied industrial space.

Finally, such cold-top furnaces show no flexibility in term of energy (electricity only).

It is also known to combine, in a "hybrid system", combustion heating means and electrical heating means. In such a configuration, which operates mainly "hot-top", the furnace comprises burners and electrodes to supply power.

Such hybrid furnaces have a great advantage in terms of energy flexibility, allowing to adapt the electrical input fraction to different parameters, operational or conjectural.

Moreover, compared to a cold-top furnace, for a same bottom temperature, a hot-top furnace allows to reach a surface melting rate which is higher (or, alternatively, a lower bottom temperature for a same surface melting rate).

Next to that, hybrid furnaces operating "hot top" show some drawbacks. In particular, there is a significant heat loss occurring (i) at the crown and walls of the melting zone and (ii) in the hot waste/flue gases produced during melting, thereby decreasing energy efficiency of the furnace. Heat recovery systems can be considered in order to limit the heat lost with flue gases but it does not annihilate the issue and it requests specific investments.

Moreover, in such furnaces, the temperature of the crown/superstructure in the melting zone can, under some conditions, become very low (e.g. < 1000°C) leading to a significantly increased risk of alkaline condensation (e.g. NaOH) in said zone and consequently, refractory corrosion of the crown.

Next to that, in those furnaces, the electrical input fraction is generally limited to maximum 35% of the total energy input, due notably to the limitations described above for the all-electrical furnaces, namely bottom and crown corrosion phenomena.

Some hybrid furnaces have been described recently with specific designs in order to increase the electrical input fraction, e.g. up to 80% but, for most of them, they operates cold-top with the issues that it brings.As *to the use of alternative and greener sources of energy like hydrogen H₂ or biogas:*
Even if it is clear that they will bring advantages in term of environment/energy consumption/CO₂ emissions, serious limitations prevents their extensive use in the glass industry (lack of availability of biogas, and expensiveness of H₂ that makes it a non-economically viable solution so far as the only source of energy to melt glass raw materials).

*As to heat recovery :*
Waste heat recovery from flue gas is already extensively applied in the glass industry to preheat the combustion air entering the furnace at temperatures higher than 1000°C, or gas and oxygen ("Hotox") at temperatures higher than 400 and 500°C respectively. Next to that, waste heat from flue gas can also be used to preheat the vitrifiable materials, especially cullet. Nevertheless, it is known that pre-heating raw materials/cullet cannot be coupled with electrical melting as the temperature of flue gas released by raw materials in this case is too low.

*As to the use of CO₂ capture:*
Generally, a CO₂ capture process in industrial processes/plants consists of two steps: (i) separation of CO₂ from an effluent gas mixture through a selective reaction with a separation material ("absorption" of CO₂) and (ii) regeneration of the material used by a reverse reaction ("desorption" of CO₂). The separation material can be re-used for CO₂ capture by sequentially repeating steps (i) and (ii). Amines, in the form of solvents or membranes or porous sorbents, are the most widely used material in CO₂ capture process in industry so far, as the technology is mature and an effective separation of amine and CO₂ via a reversible reaction is possible. Nevertheless, such an amine process (e.g., using aqueous MEA) remains a poor option, in particular in the specific context of glass industry so far, at least for the main reasons that :
- the combustion gas/flue gas in known glass manufacturing processes shows a low concentration in CO₂ (generally, below 30% and often around 10-20% in volume) and a low purity due to the presence of a lot of other components (mainly N₂, H₂O, O₂, NOₓ, SOₓ, etc), thereby affecting greatly the efficiency of the CO₂ capture process; and
- the amine-CO₂ capture process requires a lot of energy in order to regenerate the amine sorbent (desorption process), thereby affecting the total energy consumption (and potentially the CO₂ emission depending of the energy source used, which is obviously counter-productive in present context).

Moreover, known glass manufacturing processes generate very high volumes or flow rates of flue gas, which also directly impacts, whatever the used methods the investment and operational costs when one wants to capture CO₂ from those flue gas.

### OBJECTIVE OF THE INVENTION

It is an objective of the present invention to overcome the disadvantages described above with respect to the state of the art and resolving the technical problem, i.e. by providing a glass melting process to produce flat glass, using combustion and electrical heating means, showing a decreased global energy consumption and a decreased CO₂ emissions compared to a classical melting furnace, in particular compared to a classical "hot-top" hybrid melting furnace.

It is a further objective of the present invention to provide a glass melting process to produce flat glass, using combustion and electrical heating means and showing an acceptable surface melting rate (in particular, a surface melting rate above 2 or, better, above 3 T/d/m²).

It is a further objective of the present invention to provide a glass melting process to produce flat glass, using combustion and electrical heating means and with an increased lifetime compared to a classical hot-top hybrid melting furnace.

It is a further objective of the present invention to provide a glass melting process to produce flat glass, using combustion and electrical heating means, allowing a simple and cost-effective CO₂ capture.

It is a further objective of the present invention to provide a glass melting process to produce flat glass, using combustion and electrical heating means and , that is economically viable.

### DESCRIPTION OF THE INVENTION

The present invention relates to a process for melting vitrifiable materials to produce flat glass, comprising the steps of :
- providing a furnace comprising :
   (i) a melting tank M comprising at least an upstream zone Z1 covered by a crown C1 and equipped with electrical heating means; a downstream zone Z2 covered by a crown C2 and equipped with combustion heating means 3 and a transition zone T between crown C1 and crown C2;
   (ii) a fining tank F covered by a crown C4 and equipped with oxy-combustion heating means;
   (iii) a neck N covered by a crown C3 and separating the melting tank M and the fining tank F;
   (iv) at least one inlet mean X located at the melting tank M;
   (v) an outlet mean O located downstream of the fining tank F; and
   (vi) at least an extraction mean of flue gas located at the at least one upstream zone Z1;
   and having the height H1 of the crown C1 defined by : H1 ≤ 0.75*H2; H2 being the height of the crown C2, the length L1 of the at least one upstream zone Z1 defined by : 0.25*(L1+L2) ≤ L1 ≤ 0.8 *(L1+L2); L2 being the length of the downstream zone Z2, and the length LT of said transition zone T defined by : LT ≤ 0.2*(L1+L2),
- charging the vitrifiable materials comprising raw materials and cullet in the melting tank M with the at least one inlet mean X, the amount of cullet being at least 10% in weight of the total amount of vitrifiable materials;
- melting the vitrifiable materials in the melting tank M with the heating means;
- fining the melt in the fining tank F by heating with the oxy-combustion heating means alimented with gas and/or hydrogen;
- flowing the melt from the fining tank F to a working zone trough the outlet mean O;
- capturing CO₂ from flue gas, said flue gas having a CO₂ concentration of at least 35%;
with the electrical input fraction ranging from 30% to 85% and with the step of capturing CO₂ from flue gas comprising step(s) of compression and/or dehydration.

Hence, the invention is based on a novel and inventive approach. In particular, the inventors have found that by combining, in a glass melting process to produce flat glass:
- the use of a furnace with a specific design including a combination of (i) separating the a "hybrid" melting tank and a combustion fining zone by a neck and (ii) segmenting the melting tank into two zones with different crown heights (thereby providing a colder upstream zone and a warmer downstream zone, with a significant temperature difference),
- the use of oxygen as comburant,
- the use of gas and/or hydrogen as combustible,
- the use of a minimum amount of cullet in the vitrifiable materials, and
- the use of a specific and high electrical input fraction,
it is possible to obtain, at the same time :
- an acceptable surface melting rate,
- an increased furnace lifetime,
- a significant decrease of the total energy consumption;
- a significant decrease of the total CO₂ production;
- a possible independent extraction of flue gas coming from raw materials decomposition (poor in NOx and SOx impurities) and flue gas coming from combustion, thereby allowing a separated and appropriate treatment for each, if desired; and
- a significant decrease of the volume of flue gas as well as a significant increase of the CO₂ concentration in said flue gas and its purity, thereby allowing to use a simple, efficient and cost-effective CO₂ capture process.

By implementing all the features of the invention, the process of the invention shows a very low CO₂ fingerprint and is economically viable.

In present specification and claims, it is well understood by the person skilled in the art that, as used herein the terms "a", "an" or "the" means "at least one" and should not be limited to "only one" unless explicitly indicated to the contrary. Also, when a range is indicated, the extremities are included. In addition, all the integral and subdomain values in the numerical range are expressly included as if explicitly written. Finally, the terms "upstream" and "downstream" refer to the flow direction of the glass and are to be understood with their common sense, namely as meaning along the averaged moving direction of the vitrifiable materials/the glass melt, from the inlet mean(s) to the outlet mean(s). The expression "upstream part" is understood to mean the first upstream third of the length, said length being located along the horizontal and longitudinal axis of the furnace. The expression "downstream part" is understood to mean the last downstream third of said length.

Other features and advantages of the invention will be made clearer from reading the following description of preferred embodiments and figures, given by way of simple illustrative and non-restrictive examples.
FIG. 1 is a flowchart of an embodiment of the process of the invention.
FIG. 2 is a schematic plan view (vertical cross-section) of an embodiment of a furnace of the invention.
FIG. 3 is a schematic plan view (horizontal cross-section) of an embodiment of a furnace of the invention.
FIG. 4 is a schematic plan view (horizontal cross-section) of an embodiment of a furnace of the invention.
FIG. 5 is a schematic plan view (horizontal cross-section) of a furnace of embodiment of the invention.

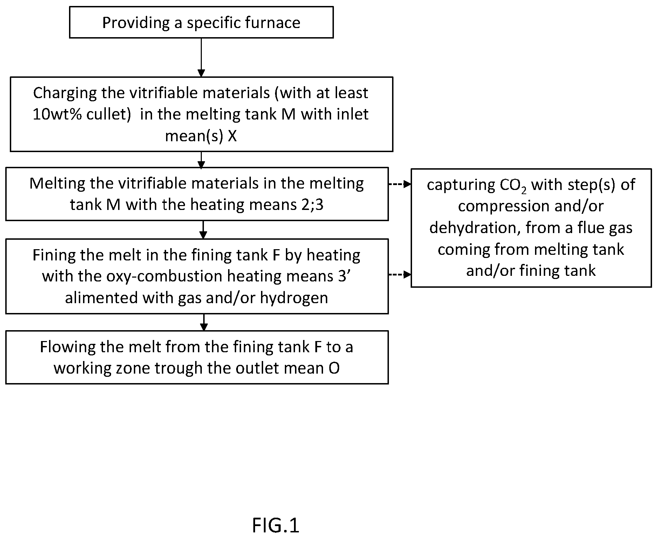

According to the invention and as illustrated at FIG.1, the process for melting vitrifiable materials to produce flat glass comprises a first step of providing a specific furnace, said furnace 1 comprising :
(i) a melting tank M comprising at least an upstream zone Z1 covered by a crown C1 and equipped with electrical heating means 2; a downstream zone Z2 covered by a crown C2 and equipped with combustion heating means 3 and a transition zone T between crown C1 and crown C2;
(ii) a fining tank F covered by a crown C4 and equipped with oxy-combustion heating means 3',
(iii) a neck N covered by a crown C3 and separating the melting tank M and the fining tank F,
(iv) at least one inlet mean X located at the melting tank M;
(v) an outlet mean O located downstream of the fining tank F; and
(vi) at least an extraction mean of flue gas located at the at least one upstream zone Z1;
and having the height H1 of the crown C1 defined by : H1 ≤ 0.75*H2; H2 being the height of the crown C2, the length L1 of the at least one upstream zone Z1 defined by : 0.25*(L1+L2) ≤ L1 ≤ 0.8 *(L1+L2); L2 being the length of the downstream zone Z2, and the length LT of said transition zone T defined by : LT ≤ 0.2*(L1+L2).

According to the invention and as commonly adopted in the glass art, by "melting tank", it is meant a tank defining a zone where the vitrifiable materials (raw materials and/or cullet) are charged and melt by heating, and comprising, when the furnace is in process, a melt and a "blanket" of unmelted vitrifiable materials that floats on the melt and is progressively melted and therefore reduced from upstream to downstream of the melting tank.

According to the invention and as commonly adopted in the glass art, by "fining tank", it is meant a tank defining a zone where there is no more "blanket" of unmelted vitrifiable materials that floats on the melt the glass melt is heated at temperatures higher than melting tank temperatures (generally above 1400°C or even above 1450°C), in order to refine the glass (mainly by eliminating major part of bubbles). This fining tank is also commonly called "clarification tank" in the art.

According to the invention, by a "neck" separating the melting tank and the fining tank, it is meant a narrowing in width and in (crown) height compared to the downstream zone of the melting tank (zone Z2) and compared to the upstream zone of the fining tank F. The opening of the neck according to the invention is only partially under the glass melt/blanket free surface, then leaving a free opening above the glass melt/blanket.

This furnace design, with a zone segmentation of the melting and fining tanks together with a height segmentation of the melting crown, brings a lot of advantages in favour of energy consumption/CO₂ emissions and in favour of mechanical stability/ lifetime of the furnace.

In particular, with a combination of (i) separating the melting tank and the fining tank by a neck and (ii) segmenting the melting tank into two zones with different crown heights in a specific design (thereby providing a colder upstream zone and a warmer downstream zone, with a significant temperature difference), the global energy consumption of the furnace may be reduced significantly while keeping a high electrical input fraction (thereby decreasing CO₂ emission), keeping an acceptable surface melting rate and improving the mechanical stability and lifetime of the furnace.

The melting crowns in the invention, C1 and C2, are designed specifically in order to take both advantages of "cold-top" and "warm-top" zones and to create a gradient of temperature from upstream, with relatively low temperatures (below 1100°C), to downstream, with relatively high temperatures (above 1300°C).

In particular, the furnace of the invention allows a full control of (i) the temperatures in each zones and (ii) the flue gas repartition/extraction between both zones of melting tank and between melting tank and fining tank, in order to optimize energy consumption, to avoid as much as possible alkali corrosion, and also to optimize CO₂ capture.

The furnace of the invention is moreover advantageous to generate at the same time a strong temperature difference between the upstream and the downstream parts of the melting tank and to avoid as much as possible the flue gas occurring from the fining tank to flow back towards the melting tank.

From energy efficiency point of view, the furnace of the invention is advantageous as it allows :
- to segment atmospheres and cut off heat radiation from the fining tank towards melting tank(s), in order to confine efficiently energy in the zone where high temperatures are needed (fining zone) ; and
- to extract flue gas from the upstream part/exit at the lowest possible temperature, in order to limit the useless heating of gases released from vitrifiable materials and in order to optionally maximize the heat transfer from combustion gases to vitrifiable materials and glass melt.

From surface melting rate point of view, it is advantageous as it allows to reach relatively high temperature (>1300°C) in the downstream part of the melting tank in order to improve vitrifiable materials melting kinetics.

From corrosion point of view, it is advantageous as it allows :
- to separate atmospheres between the melting and the fining tanks allows to limit/avoid reflux of flue gas from the fining zone which are rich in alkali due to high temperatures required for fining and which therefore are very corrosive; and
- to have a restriction of the global molten glass flow that will advantageously reduce the strength of glass convection in the melting tank and reduces the glass velocity, and thereby decreasing bottom refractory wear and corrosion.

Finally, the furnace of the invention with its specific segmentation between melting and fining tanks (through a neck) also allows to completely dissociate the dimensioning (lengths, widths and crown heights) and refractories nature of the melting and the fining tanks, and therefore to optimize each tank taking into account energy efficiency, glass quality, plant space constraints, and mechanical/structural/other constraints.

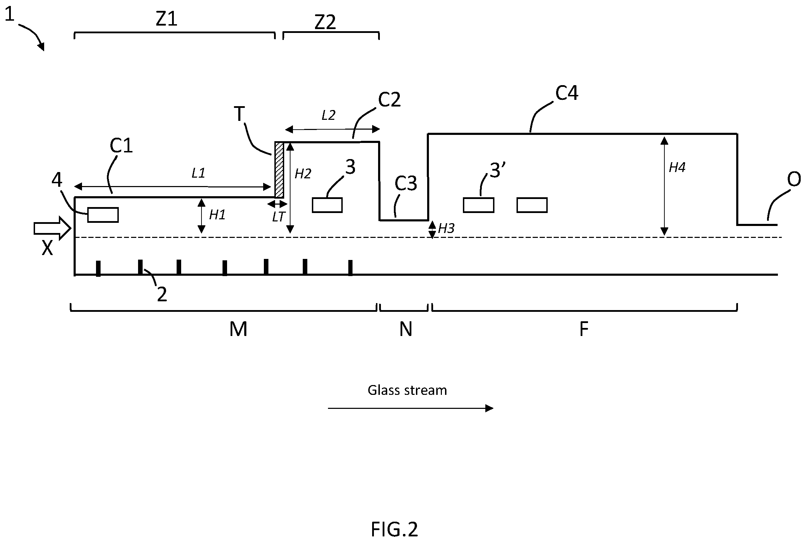

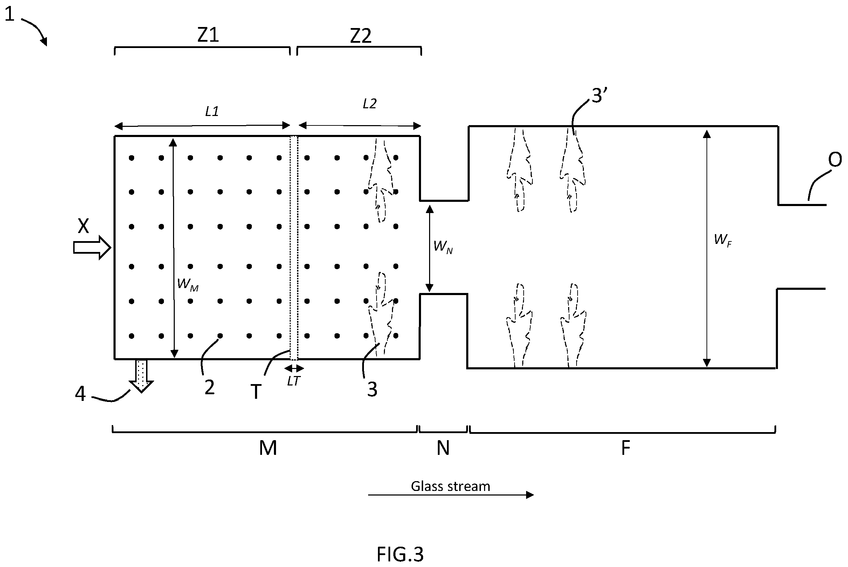

FIGS. 2 and 3 illustrate an embodiment of a furnace 1 of the invention (FIG.2: vertical cross-section, FIG.3: horizontal cross-section).

The furnace 1 of the invention comprises a melting tank M, a neck N and a fining tank F. The assemblies of M, N and F is commonly made from refractory materials resistant to temperatures, corrosion of the fumes and aggressive action of the molten materials. The illustrative glass melt level (excluding the batch blanket) in the tank is shown by a broken line in FIG.2.

According to the invention and as illustrated at FIGS. 2-3, the furnace 1 comprises at least one inlet mean X at the melting tank M, in order to charge the furnace with vitrifiable materials (glass raw materials and/or cullet).

To improve distribution over the surface of the melting tank M, several inlet means located upstream of the melting tank M (or, in other words, in the zone Z1) be advantageously provided, i.e. two or three inlet means. Preferably, and as known in the art, the at least one inlet mean X is located upstream of the melting tank M, either in the width of said tank and/or laterally in its length.

As illustrated at FIGS. 2-3, the furnace 1 of the invention comprises a melting tank M comprising:
- at least an upstream zone Z1 covered by a crown C1 and comprising electrical heating means 2;
- a downstream zone Z2 covered by a crown C2 and comprising electrical heating means 2 and combustion heating means 3;
- a transition zone T between crown C1 and crown C2.

According to an advantageous embodiment, the downstream zone Z2 comprises further electrical heating means, as illustrated in FIGS. 2 and 3.

Electrical heating means 2 according to the invention are preferably located at the bottom of the melting tank M and preferably, also, composed of immersed electrodes. The electrodes are advantageously arranged in grid pattern (checkerboard) multiple of 3 or 2, in order to facilitate connection to transformers and electric current balance. For example, the number of electrodes is designed in order to limit maximum power for each electrode to 200kW, by respecting a maximum current density of 1.5A/cm² at the electrode surface. For example also, immersed electrodes height is between 0.3 and 0.8 times glass melt height.

Combustion heating means 3 in the downstream zone Z2 in the melting tank M are especially composed of burners. In particular, they may be commonly arranged in rows and be arranged along side walls of said zone, e.g. on one side or alternatively on each side thereof to spread the flames over practically the entire width of said zone. They may also be, alternatively or additionally, located in the crown C2, which promotes heat transfer to batch and is then is advantageous to reduce the batch length and avoid that the batch blanket reaches the end of the downstream zone Z2 and thereby the downstream end of the melting tank.

The combustion heating means 3 may be supplied with fuel and air, or fuel and oxygen, or fuel and a gas that is enriched in oxygen. Fuel may be fossil fuel, natural gas, biogas, hydrogen, synthetic gas, ammonia, or mixture thereof.

According to an advantageous embodiment, the at least one upstream zone Z1 may comprise further auxiliary combustion heating means (e.g. burners, not illustrated in FIGS.), in order to allow a control of the temperature of the crown C1 (e.g. to limit temperature variation along zone Z1) and raise the temperature if it drops below a certain level (e.g. below 600°C). In particular, these auxiliary combustion heating means may be advantageously located in the crown C1, to reduce occupation of space in the free volume above the melt/batch blanket.

The upstream zone Z1 according to the invention has a crown C1. The downstream zone Z2 according to the invention has a crown C2.

According to the invention, the height H1 of the crown C1 is defined by : H1 ≤ 0.75*H2; H2 being the height of the crown C2. In the invention, the change in height between the crowns C1 and C2 along the melting tank M implies a transition zone T.

By "height" for a crown in the invention, it is meant, herein and in the whole specification and claims, the average inner height (as illustrated in FIG.2), from the inner surface of said crown to the glass melt (excluding batch blanket if present). The height H1 of the crown C1 may be substantially constant along the length of said crown, or alternatively, it may vary in the length of said crown. The height H1 of the crown C1 may be substantially constant along the width of said crown, or alternatively, it may vary in the width of said crown (e.g. in case of an arched/vaulted crown). The height H2 of the crown C2 may be substantially constant along the length of said crown, or alternatively, it may vary in the length of said crown. The height H2 of the crown C2 may be substantially constant along the width of said crown, or alternatively, it may vary in the width of said crown (e.g. in case of an arched/vaulted crown).

According to an embodiment of the invention, the height H1 of the crown C1 is defined by : H1 ≤ 0.7*H2, preferably, H1 ≤ 0.6*H2 and even, H1 ≤ 0.5*H2. This allows to enhance the above-described advantages of the invention.

According to the invention, the length L1 of the at least one upstream zone Z1 is defined by : 0.25*(L1+L2) ≤ L1 ≤ 0.8*(L1+L2); L2 being the length of the downstream zone Z2.

By "length", it is meant, herein and in the whole specification and claims, the dimension taken along the glass stream.

According to another embodiment of the invention, the length L1 of the at least one upstream zone Z1 is defined by : 0.3*(L1+L2) ≤ L1, preferably, 0.4*(L1+L2) ≤ L1 and even 0.5*(L1+L2) ≤ L1. This allows also to enhance the above-described advantages of the invention.

According to another embodiment of the invention, the length L1 of the at least one upstream zone Z1 is defined by : L1 ≤ 0.75*(L1+L2), preferably L1 ≤ 0.7*(L1+L2).

It is worth to mention that the total length of the melting tank may be a bit higher (e.g. in the order of 10%-15%) than the sum (L1 + L2). Indeed, it is common in the art to provide the extreme upstream part of the melting tank with a first zone Z0 (generally called "doghouse") for the introduction of the vitrifiable materials and their push in the direction of the melt (not illustrated in FIGS.).

The crown C1 according to the invention may be arched or vaulted, or alternatively, it may be flat. Independently of the crown C1, the crown C2 according to the invention may be arched or vaulted, or alternatively, it may be flat.

Advantageously, the crown C1 may be composed of refractories made essentially of silica (e.g. high-purity silica). Silica refractories are known to be more sensible to corrosion (compared to alumina for example) but, thanks to the existence of the neck separating the melting and the fining tanks in the invention, there is less alkali in the fumes present in the melting tanks.

The advantage of silica is its low dilatation coefficient if temperature is above about 600°C, that allows to stand high variations in temperature without disturbing the crown superstructure.

Alternatively, the crown C1 and/or the crown C2 may be composed of refractories made essentially of alumina or AZS (alumina-zirconia-silica), which have a better resistance to corrosion and therefore a better lifetime.

According to the invention and as illustrated at FIG. 2, the furnace comprises a melting tank M comprising at least one upstream zone Z1 and a downstream zone Z2 with different crown heights, C1 with a height H1 and C2 with a height H2.

In the furnace provided in the process according to the invention, the change in height between the crowns C1 and C2 along the melting tank M implies a transition zone T.

According to the invention, the length LT of the transition zone T is defined by : LT ≤ 0.2*(L1+L2), preferably LT ≤ 0.15*(L1+L2), or even LT ≤ 0.1*(L1+L2).

According to an embodiment, the transition zone T between crown C1 and crown C2 may be a gable wall. The gable wall according to an embodiment may be a vertical wall or a short inclined wall (allowing a progressive transition). In this embodiment, the crown C1 has preferably an inner surface which is at essentially the same level as, or slightly lower than, the lower edge of the gable wall. The gable wall can be composed of a suspended backwall. A suspended backwall in accordance with the invention may be for example one as described in patent application US5011402A. Alternatively, the gable wall may lay down on the outer surface of crown C1.

According to another embodiment, the transition zone T between crown C1 and crown C2 is a shadow wall. By "shadow wall" in the invention, it is meant a wall that has a lower edge extending below the inner surface of the crown C1, and thereby closer to the glass melt, but that leaves a free space above said glass melt. This embodiment has the advantage of further reducing the radiation heat exchange between the upstream and downstream zones of the melting tank, and of better separating the flue gas released from Z1 and Z2, while allowing the vitrifiable materials pushed from upstream to pass through the free space left. For example, this shadow wall may be a air-cooled suspended wall, as known in the art. A shadow wall according to the invention may be composed of a suspended U-shaped shadow wall, as for example as described in patent application US3399046A.

According to further embodiment, the transition zone T between crown C1 and crown C2 comprises at least one step. In a configuration with one step, the change in height of the crowns C1 and C2 is obtained by a transition zone T comprising, from C1 to C2: a first gable wall, a short crown at a height intermediate between H1 and H2 and a second gable wall. This configuration has the advantage to facilitate the manufacturing and increase the stability of the transition between crown C1 and crown C2.

By "length of the transition zone", it is meant, herein and in the whole specification and claims, the dimension of said zone taken along the glass stream and including thickness of wall(s) (even if laying down and/or overlapping crown C1 and/or crown C1).

According to an advantageous embodiment, the transition zone is composed of refractories made essentially of silica.

Advantageously, according to another embodiment, the crown C1 and transition zone T are made of the same refractory material, in order to avoid dilatation between materials and/or to avoid inter-material corrosion. Preferably, there are composed of refractories made essentially of silica.

Advantageously also, according to another embodiment, the crown C1, the crown C2 and transition zone T are made of the same refractory material, in order to avoid dilatation between materials and/or to avoid inter-material corrosion. Preferably, there are composed of refractories made essentially of silica.

According to the invention, the furnace comprises a fining tank F covered by a crown C4 and equipped with oxy-combustion heating means 3'.

By "oxy-combustion means" 3' according to the invention, it is meant combustion means supplied with gaseous oxygen (O₂) as comburant. Generally, O₂ gas comburant supplied to glass melting furnaces is at least 90% purity, or even at least 95% purity. An advantage of using gaseous oxygen as comburant, compared to using air, is the drastic decrease of the so-called corrosive « NOx » pollutants appearing during the combustion. Even if they could still be present in the flue gas (depending on the O₂ purity and amount of parasitic air), it will be in very low amounts.

Oxy-combustion heating means 3' from the fining tank F according to the invention may be composed of burners, advantageously arranged along the side walls of the fining tank. Moreover, the burners are advantageously spaced from one another in order to distribute the energy supply over a portion, preferably the upstream part (for example, on ^{~}50% of the length) of the fining tank F. They are also commonly arranged in rows on one side or, alternatively, on each side of the fining tank F and preferably in a staggered arrangement (to spread the flames over practically the entire width of said tank).

The crown C4 according to the invention is preferably arched or vaulted.

According to an advantageous embodiment, the fining tank F may comprise further electrical heating means (not illustrated FIGS.), in particular in the upstream part of said fining tank (for example, on ^{~}50% of its length). This allows to increase the electrical input fraction and to increase consequently the energy efficiency, and thereby decrease CO₂ emission.

According to the invention, the furnace comprises a neck N covered by a crown C3 and separating/segmenting the melting tank M and the fining tank F.

According to the invention, by a "neck" separating the melting tank M and the fining tank F, it is meant a narrowing in width and in (crown) height compared to the downstream zone of the melting tank (zone Z2) and compared to the upstream zone of the fining tank F. The opening of the neck according to the invention is only partially under the glass melt/batch blanket free surface, then leaving a free opening above the glass melt/batch blanket.

According to the definition of a neck according to the invention, the width W_{N} of the neck N is as follows : W_{N} < W_{M}, W_{M} being the width of the melting tank M. Also according to the definition of a neck according to the invention, the width W_{N} of the neck N is as follows : W_{N} < W_{F}, W_{F} being the width of the fining tank F.

By "width" in the invention, it is meant, herein and in the whole specification and claims, the dimension (in average) perpendicular to the glass stream.

This furnace design, with a segmentation of the melting and fining tanks, brings a lot of advantages in favour of energy consumption/CO₂ emissions and in favour of mechanical stability/ lifetime of the furnace. In particular, advantageously in the context of present invention, this furnace with its specific segmented design allows to deal with flue gas from melting tank (zone Z1 and/or zone Z2) and flue gas from fining tank independently, if desired.

The base of the neck N in the invention may be located essentially at the level of the floor/bottom of the melting tank M, or above said level or below said level. Moreover, the base of the neck N may be located essentially at the level of the floor/bottom of the fining tank F, or above said level or below said level.

According to an embodiment, the neck N does not comprise any heating means, e.g. any electrical heating means.

The crown C3 according to the invention may be arched or vaulted, or alternatively, it may be flat. According to the definition of a neck according to the invention, the crown C3 of the neck N has a height H3 which is lower than the height H2 of the crown C2 of the melting tank M. Also according to the definition of a neck according to the invention, the crown C3 of the neck N has a height H3 which is lower than the height H4 of the crown of the fining tank F.

According to still another advantageous embodiment of the invention, the furnace may comprise a removable wall located at the neck (e.g. a skimbar coming from the side wall of the neck), in order to (i) possibly stop unmelted vitrifiable materials that could arrive at the end of the melting tank and thereby avoid their passing through the neck towards the fining tank and (ii) control the intensity of or annihilate the backward flow of the glass melt from the fining towards the melting tank.

According to still another advantageous embodiment of the invention, the furnace may comprise a removable wall located at the neck (e.g. a shadow wall passing through the crown of the neck) in order to increase segmentation of melting and fining tanks in terms of atmosphere and heat radiations.

According to the invention, the furnace comprises an outlet mean O located downstream of the fining tank F for the melted glass to reach a working zone. According to an embodiment, the outlet mean O is composed usually of a neck, in order to lead the melt towards a working zone commonly called "working end" or also "braise" or also "conditioning zone". Alternatively, the outlet mean O is composed of a throat (namely an opening completely immerged in the glass melt, leaving no free surface above it), in order to lead the melt towards a working zone including, for example, forehearth(s). The working zone according to the invention may comprise, for example, a conditioning zone in which thermal conditioning by controlled cooling is carried out prior to glass melt leaving said zone through an outlet to a forming zone. Such a forming zone may comprise, for example, a float installation and/or a rolling installation.

According to the invention (as illustrated in FIGS.2 and 3), the furnace comprises at least an extraction mean 4 of flue gas located at the at least one upstream zone Z1, preferably close to inlet mean(s) X, in order to recover and transfer heat from flue gas to the glass melt and/or unmelted vitrifiable materials in the melting tank M.

According to an embodiment of the invention, the furnace comprises further at least an extraction mean of flue gas in the downstream zone Z2 and/or at least an extraction mean of flue gas in the fining tank F (not illustrated in FIGS).

When an extraction mean is present in the zone Z2, this allows advantageously to extract flue gas from downstream zone Z2 if this gas is rich in alkali (and thereby avoid condensation and subsequent corrosion in the zone Z1).

When an extraction mean is present in the fining tank F, it is preferably located in the upstream part of fining tank.

Preferably, in the invention, the extraction mean(s) 4 is/are located on side walls, on one side or both sides.

In particular, it is advantageous energetically in the invention that the flue gas is extracted at maximum from the upstream of the furnace, and in particular from the upstream of the melting tank. For example, at least 25% of flue gas generated in the melting zone may be advantageously extracted from the upstream of the melting tank. Nevertheless, extracting a part of the flue gas from downstream in the melting tank could be advantageous in order to limit risks related to alkali attack of crown refractory materials. Indeed, alkali evaporation increases with temperature, and alkali concentration in flue gas will then be higher in the downstream part of the melting zone. Flue gas with higher alkali concentrations could generate problems related to condensation in colder areas of the superstructure/crown, so that it would be better to discharge them from downstream. Moreover, extracting a part of the flue gas from upstream in the melting tank could be advantageous because in that upstream zone, the flue gas are essentially made of gas release from raw materials decomposition and therefore poor in alkali. Finally, extracting a part of the flue gas from the fining tank could also be advantageous, as flue gas in the fining tank are even more charged with alkali due to higher temperatures required for fining.

Moreover, it is further advantageous in the invention that the flue gas (at least a major part of it) generated from raw materials decomposition in the upstream Z1 of the melting tank can be extracted (and thereby treated) almost independently from flue gas coming from combustion (in zone Z2 and/or in fining tank). Indeed, flue gas occurring in the zone Z1 are poor in NOx in SOx and therefore facilitates CO₂ capture.

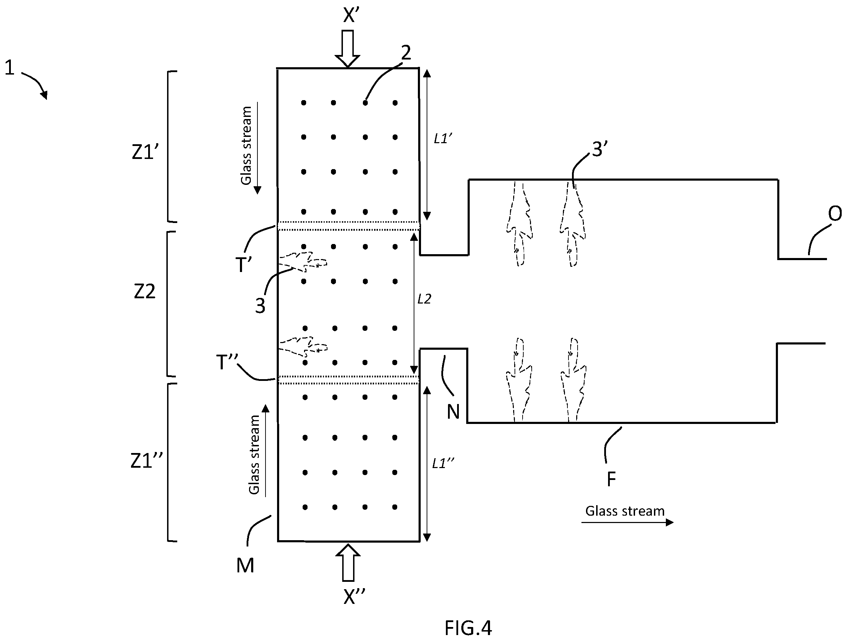

In an advantageous embodiment of the invention, illustrated at FIG.4, the furnace of the invention comprises a melting tank M enlarged laterally and equipped with inlet mean(s) X' and X" located at each lateral side, so that the melting tank comprises two different upstream zones Z1' and Z1" and two transition zones T' and T", with two opposed glass streams converging through a central downstream zone Z2.

In this configuration:
- the height H1' of the melting crown C1' is defined by : H1' ≤ 0.75*H2;
- the height H1" of the melting crown C1" is defined by : H1" ≤ 0.75*H2;
- the length L1' of the at least one upstream zone Z1' is defined by : 0.25*(L1'+L2) ≤ L1' ≤ 0.8*(L1'+L2);
- the length L1" of the at least one upstream zone Z1" is defined by : 0.25*(L1"+L2) ≤ L1" ≤ 0.8*(L1"+L2);
- the length LT' of transition zone T' is defined by : LT' ≤ 0.2*(L1'+L2); and
- the length LT" of transition zone T" is defined by : LT" ≤ 0.2*(L1"+L2).

In this configuration also:
- the melting tank comprises one downstream crown C2 and two upstream crowns C1' and C1". Crowns C1' and C1" may be each configured independently according to any embodiment of the invention related to the crown C1. For example, the upstream crowns C1' and C1" may have the same or different height H1' and H1";
- the melting tank comprises two transition zones T' and T". They may be each configured independently according to any embodiment of the invention related to the transition zone T.

In this configuration also, for example, the combustion heating means 3 are located as illustrated at FIG.4, in the melting tank wall facing the neck, for example two burners. Alternatively, for example, the combustion heating means 3 are located in the crown C2.

In this advantageous configuration/embodiment, each upstream zone, each upstream crown and each inlet mean is according to the invention and its embodiments and may be designed independently of the other upstream zone, upstream crown and inlet mean respectively, according to the description above. Hence, for sake of clarity, features described above in relation with Z1 are applicable to Z1' and Z1" independently, features described above in relation with C1 are applicable to C1' and C1" independently, features described above in relation with T are applicable to T' and T" independently, and features described above in relation with X are applicable to X' and X" independently. Moreover, specific advantageous features described in relation with M, C2, C3, C4, N, F, etc. are applicable also to this specific configuration, with the same advantages.

Specific glass furnace designs with a segmentation by a neck between melting tank and fining tank are described in European patent application EP21200998.9 which in the meantime has been withdrawn.

According to a particular embodiment, the furnace of the invention is defined by the following: $0.1 * {W}_{F} \leq {W}_{N} \leq 0.6 * {W}_{F} ;$ ${W}_{M} \geq 1.4 * {W}_{N} ;$
W_{M} being the width of the melting tank M;
W_{F} being the width of the fining tank F;
W_{N} being the width of the neck N.

This embodiment allows to enhance the above-described advantages of the invention, and in particular:
- to better separate atmospheres between the melting and the fining tanks, thereby limiting reflux of corrosive fumes from the fining tank to the melting tank;
- to enhance the cut off of heat radiation from the fining tank towards the melting tank;
- to enhance restriction of the global molten glass flow or even to annihilate the backward flow.

Preferably also, the furnace is defined by 0.2*W_{F} ≤ W_{N} ≤ 0.6*W_{F}, or even by 0.3*W_{F} ≤ W_{N} ≤ 0.5*W_{F}. This allows to find a good compromise between two opposite requirements : from one side, the neck(s) between the melting zone and the fining zone should be ideally as narrow as possible in order to (1) decrease the opening between melting and fining superstructures/crowns and (2) generate an obstacle to global glass melt convection strength in the melting tank, and, from the other side, the neck should be ideally as wide as possible in order to limit glass velocity inside the neck, to limit neck refractory wall wear/corrosion.

Preferably also, the furnace of the invention is defined by W_{M} = 1.5*W_{N}, or even W_{M} ≥ 1.8*W_{N}. More preferably, the furnace of the invention is defined by W_{M} ≥ 2*W_{N}. This allows to reach a higher width restriction at the neck N and to improve the cut off of heat radiation, to allow better atmosphere separation and to generate a restriction of the molten glass flow.

According to embodiments, the furnace may comprise one melting tank and one neck; or two melting tanks and two necks; or even three melting tanks and three necks. These embodiments are extensively described in European patent application EP21200998.9 which in the meantime has beer withdrawn.

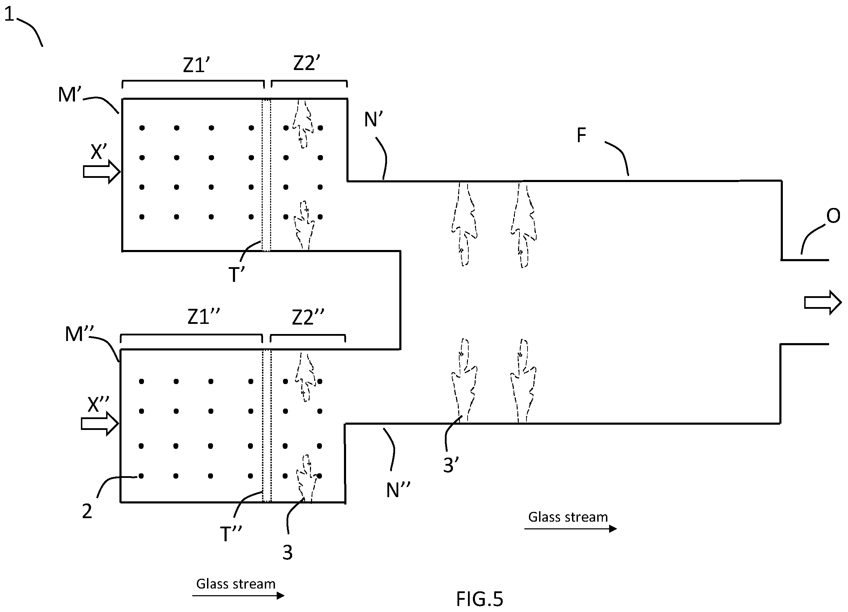

In the specific "two melting tanks" configuration, illustrated at FIG.5, the furnace for melting vitrifiable materials comprises two melting tank M' and M", two necks N' and N" (one for each melting tank) and at least two inlet means X' and X" (one for each melting tank).

This configuration is particularly advantageous compared to the configuration with one melting tank (FIG.3) as it allows:
- to reduce the crown span of each melting tank for a same global melting tank area and furnace length (the length is generally more a constraint than the width). The reduction of crown span allows
   (i) to reduce stress inside the crown materials, and then reduce risk regarding material creep and crown sagging. It will then make possible the use of refractory materials that are more resistant to corrosion and less resistant to creep, such as alumina or spinel, and thereby increase furnace lifetime;
   (ii) to reduce crown average height in case of arched shaped crown C1 and/or C2, leading to lower horizontal radiation transfer, and subsequently to better heat transfer from flue gas to the glass melt in case flue gas is extracted from melting tanks;
- for a same total neck width (W_{N'} + W_{N"}) and in case of arched shaped neck crown C3, to reduce the opening surface between the melting and fining tanks;
- for a same total neck width (W_{N'} + W_{N"}), to reduce the strength of glass convection in the melting tank;
- to render easier furnace maintenance in the melting zone. Indeed, with 2 melting tanks, it is possible to isolate one melting tank from the rest of the furnace and cooling it down, while pursuing production with the other melting tank. It is then possible to increase the total furnace lifetime, by replacing worn refractory materials in the melting areas which is the most critical area regarding wear/corrosion.

In this configuration, the furnace has two melting tanks M', M", each melting tank having its upstream zone, Z1' or Z1", its upstream crown, C1' or C1", its downstream zone, Z2' or Z2", its transition zone, T' or T", and its inlet mean, X' or X". Moreover, each melting tank M' and M" is separated from the fining tank F by a neck, N' and N" respectively.

In this configuration, according to the invention:
- the height H1' of the melting crown C1' is defined by : H1' ≤ 0.75*H2';
- the height H1" of the melting crown C1" is defined by : H1" ≤ 0.75*H2";
- the length L1' of the upstream zone Z1' is defined by : 0.25*(L1'+L2') ≤ L1' ≤ 0.8*(L1'+L2'); and
- the length L1" of the at least one upstream zone Z1" is defined by : 0.25*(L1"+L2") ≤ L1" ≤ 0.8*(L1"+L2");
- the length LT' of transition zone T' is defined by : LT' ≤ 0.2*(L1'+L2'); and
- the length LT" of transition zone T" is defined by : LT" ≤ 0.2*(L1"+L2").

In this configuration also, the furnace may be advantageously defined by the following : $0.1 * {W}_{F} \leq {W}_{N ′} \leq 0.6 * {W}_{F} ;$ $0.1 * {W}_{F} \leq {W}_{N "} \leq 0.6 * {W}_{F} ;$ ${W}_{M ′} \geq 1.4 * {W}_{N ′} ;$ ${W}_{M ′} \geq 1.4 * {W}_{N "} ;$
W_{M'} being the width of the melting tank M';
W_{M"} being the width of the melting tank M";
W_{F} being the width of the fining tank F;
W_{N'} being the width of the neck N'.
W_{N'} being the width of the neck N".

In this configuration also:
- the upstream and downstream zones may be each configured independently according to any embodiment of the invention related to Z1 and Z2.
- the crowns C1' and C1" may be each configured independently according to any embodiment of the invention related to the crown C1. For example, the upstream crowns C1' and C1" may have the same or different height H1' and H1";
- the crowns C2' and C2" may be each configured independently according to any embodiment of the invention related to the crown C2. For example, the crowns C2' and C2" may have the same or different height H2' and H2"; and
- the transition zones T' and T" may be each configured independently according to any embodiment of the invention related to the transition zone T.

In this advantageous configuration/embodiment, each melting tank, each upstream zone, each downstream zone, each transition zone, each neck and each inlet mean is according to the invention and its embodiments and may be designed independently of the other melting tank, upstream zone, downstream zone, transition zone, neck and inlet mean respectively, according to the description above. Hence, for sake of clarity, features described above in relation with M are applicable to M' and M" independently, features described above in relation with Z1 are applicable to Z1' and Z1" independently, features described above in relation with C1 are applicable to C1' and C1" independently, features described above in relation with Z2 are applicable to Z2' and Z2" independently, features described above in relation with C2 are applicable to C2' and C2" independently, features described above in relation with T are applicable to T' and T" independently, and features described above in relation with X are applicable to X' and X" independently.

Moreover, specific advantageous features described in relation with the furnace with one melting tank (e.g. those described in relation with C3, C4, F) are applicable to this "two melting tanks" configuration, with the same advantages.

In the "two melting tanks" furnace according to an embodiment, the two melting tanks M' and M" are preferably connected to the fining tank F by two necks N', N" located in the width W_{F} of said fining tank F (as illustrated in FIG.5). Alternatively, in the "two melting tanks" configuration, one melting tank is connected to the fining tank by a neck located in the width W_{F} of the fining tank and the second melting tank is connected to the fining tank by a neck located in the length of the fining tank (right or left side) and close to upstream of the fining tank (i.e. in the first third of its length). This last configuration may be advantageous, for example, when the space existing in the plant housing the furnace is not sufficient to place two melting tanks side by side.

In the "two melting tanks" configuration, in the case where the two melting tanks are connected to the fining tank by the necks located in the width W_{F} of said fining tank, the distance D between the two melting tanks is preferably at least 1m, and more preferably, at least 2m, or better at least 3m. This is advantageous as it allows access to the zone for maintenance operations and tank wall overcoating.

In an alternative embodiment of the invention, the furnace is in a configuration with three melting tanks; three necks and three inlet means. This embodiment is particularly advantageous compared to the configuration with one melting tank in the same way as for the "two melting tanks" configuration. In this "three melting tanks" configuration, each neck, each melting tank and each inlet mean is according to the invention and its embodiments, and may be designed independently of the other necks, melting tanks and inlet means respectively, according to the description above.

Specific advantageous features described in relation with the furnace with "one melting tank" and with "two melting tanks" configurations are applicable to the "three melting tanks" configuration, with the same advantages.

In the "three melting tanks" furnace according to an embodiment, in the case where at least two melting tanks are connected to the fining tank by necks located in the width W_{F} of said fining tank, the distance D between two adjacent melting tanks is preferably at least 1m and more preferably, at least 2m, or better at least 3m.

In all furnace configurations according to the invention, namely "one melting tank", "two melting tanks" and "three melting tanks" configurations, to facilitate distribution of the vitrifiable materials to charge, more than one inlet mean may be provided for each melting tank, i.e. two inlet means by melting tank.

Preferably, the total surface area of the melting tank(s) ranges from 25 to 400 m². Preferably also, according to the invention, the surface area of the fining tank F ranges from 25 to 400 m².

According to the invention and as illustrated at FIG.1, the process for melting vitrifiable materials to produce flat glass comprises a step of charging the vitrifiable materials comprising raw materials and cullet in the melting tank with at least one inlet mean.

According to the invention, as the vitrifiable materials comprise raw materials and cullet, both are preferably charged together in the melting tank M, i.e. through same inlet mean(s) X. Alternatively, both are charged in the melting tank M independently, through different inlet mean(s) X (for example, one inlet mean for the raw materials and one inlet mean for the cullet, or two inlet means for the raw materials and two inlet means for the cullet).

According to the invention, the amount of cullet is at least 10% in weight of the total amount of vitrifiable materials. Preferably, the amount of cullet is at least 20% in weight of the total amount of vitrifiable materials. More preferably, the amount of cullet is at least 30% in weight of the total amount of vitrifiable materials, or even, very preferred, at least 40% in weight. This is advantageous as it allows to reduce the CO₂ production/emission of the process of the invention (due to a reducing of the emission occurring from the decarbonization of the carbonate raw materials). Preferably also, the amount of cullet is at maximum 90% in weight of the total amount of vitrifiable materials, or even at maximum 80% in weight. More preferably, the amount of cullet is at maximum 70% in weight of the total amount of vitrifiable materials, or even at maximum 60% in weight.

According to the invention and as illustrated at FIG.1, the process for melting vitrifiable materials to produce flat glass comprises a step of melting the vitrifiable materials in the melting tank M by heating with the heating means, namely the electrical heating means 2 and the combustion heating means 3.

According to the invention and as illustrated at FIG.1, the process for melting vitrifiable materials to produce flat glass comprises a step of fining the melt in the fining tank F by heating with the oxy-combustion heating means 3' alimented with gas and/or hydrogen. The term "gas" herein includes, but not only, natural gas, synthetic gas and biogas. Natural glass is the most widely used presently for practical, economical and availability reasons.

According to the invention, the oxy-combustion heating means 3' are alimented with gas and/or hydrogen. In an embodiment, the oxy-combustion heating means 3' are alimented with at least 50% hydrogen and preferably, at least 80% hydrogen. More preferably, the oxy-combustion heating means 3' are alimented with 100% hydrogen. This is advantageous as it allows to decrease drastically to global CO₂ emission of the process. In an alternative, the oxy-combustion heating means are alimented with more than 50% gas and preferably, at least 80% gas, or even at least 100% gas. This is advantageous as it allows to reach a higher concentration of CO₂ in the flue gas, thereby facilitating and improving the CO₂ capture step, but also to limit impact on the chemistry of glass and on furnace refractory materials. In a specific and advantageous embodiment of the invention, the oxy-combustion heating means 3' are alimented with 50% gas and 50% hydrogen.

According to the invention, the electrical input fraction in the process ranges from 30% to 85%. By "electrical input fraction" according to the invention, it is meant the part of electricity in the total energy input of the process/furnace for the melting/fining, namely electricity/(fuel+electricity), the total energy input being that of the process/furnace in standard/normal production mode, i.e. at its standard pull range (excluding periods of start-up, maintenance, hot repair, culleting,...). Preferably, the electrical input fraction ranges from 35% to 85% and, more preferably, from 40% to 85%.

According to the invention and as illustrated at FIG.1, the process for melting vitrifiable materials to produce flat glass comprises a step of flowing the melt from the fining tank F to a working zone trough the outlet mean O.

According to the invention, the outlet mean O is located downstream of the fining tank F, for the melted glass to reach a working zone. According to an embodiment, the outlet mean is composed usually of a neck, in order to lead the melt towards a working zone commonly called "working end". Alternatively, the outlet mean is composed of a throat, in order to lead the melt towards a working zone including, for example, forehearth(s). The working zone according to the invention may comprise, for example, a conditioning zone in which thermal conditioning by controlled cooling is carried out prior to glass melt leaving said zone through an outlet to a forming zone. Such a forming zone may comprise, for example, a float installation and/or a rolling installation.

According to the invention and as illustrated at FIG.1, the process for melting vitrifiable materials to produce flat glass comprises a step of capturing CO₂ from flue gas.

According to the invention, said flue gas (namely the flue gas which undergoes the step of CO₂ capture) has a CO₂ concentration of at least 35%. The CO₂ concentration according to the invention is the concentration defined for the dry flue gas, namely the flue gas with all its components except the water (H₂O). Preferably, the flue gas in the invention has a CO₂ concentration of at least 40%, and more preferably, of at least 50%, or even more of at least 60%. This is advantageous as the higher the concentration in CO₂ of the flue gas, the easier and effective the CO₂ capture applied on this flue gas.

According to the invention, the step of capturing CO₂ from flue gas comprises step(s) of compression and/or dehydration. The step of dehydration corresponds to a step of water condensation and/or drying of the flue gas. The step of compression corresponds to increasing the pressure of CO₂, commonly by using a compressor. The step of dehydration may be prior to the step of compression, and/or the step of dehydration may be concomitant to the step of compression.

In particular, the step of capturing CO₂ from flue gas according to the invention may carried out, in a known manner, using a CO₂ compression and purification unit (or CPU).

The flue gas according to this invention, as illustrated at FIG.1, may be recovered for CO₂ capture either from the melting tank M or from the fining tank F or from both. In particular, if the oxy-combustion heating means 3' according to the invention are alimented with hydrogen only, the flue gas are advantageously recovered only from the melting tank M (the flue gas evolving from the fining tank F does not include CO₂).

After the step of capturing CO₂ according to the invention, the CO₂ product has, for example, a pressure of about 35 bar at temperature 5°C-40°C, in a gaseous form, appropriate for transport through pipelines, or of about 100 bar in the liquid form, appropriate for transport through pipelines but also truck or rail transport. For transport by truck, a value of 15barg at -35°C is also known as appropriate.

This simple and effective CO₂ capture process is very advantageous as it allows avoiding the use of any sorbent/chemical reagents that would contribute to operating/energy costs and environmental issues, and as it allows to reach a CO₂ capture that is cost-effective, rendering the whole process of the invention economically viable.

According to a preferred embodiment, the step of capturing CO₂ from flue gas consists essentially in step(s) of compression and/or dehydration.

According to an advantageous embodiment, the process of the invention comprises further a step of eliminating acidic components from flue gas. This step of eliminating acidic components is carried out prior or concurrent to the step of capturing CO₂ (for example prior to or concurrent to/together with the step(s) of compression and/or dehydration).

The step of eliminating acidic components may include a step of desulphurization (or removing of the so-called « SOx » compounds) of the flue gas. It may also include a step of removing the so-called « NOx » compounds, that could still be present even if in very low amounts due to the use of oxygen as comburant. This is advantageous as this allows removing the corrosive compounds (SOx, NOx) before the transportation, storage and/or utilization.

After the step of capturing CO₂ according to the invention, in a known manner, the CO₂ product (for example, in a liquid form) may be transported to its final destination through pipelines, then either stored/sequestrated (for example, deep undersea or in a geological formation such as a saline aquifer) or, alternatively, utilized (for example, for enhanced oil recovery, or for food/beverage applications or for fire protection applications). Advantageously, the CO₂ product obtained after the step of capturing CO₂ may be used locally, to limit transportation. This can be considered if the amount of CO₂ captured is not too high so that it can be absorbed by local market(s).

According to an advantageous embodiment of the invention, the process comprises further a step of cullet pre-heating, at least partially by recovering heat from the furnace 1, before charging said cullet in the melting tank M. According to this embodiment, recovering heat from the furnace 1 may be carried out from flue gas coming from (i) the melting tank M, or (ii) the fining tank F or (iii) from the whole furnace (thereby including flue gas from the melting and fining tanks).

According to this embodiment and advantageously, the CO₂ capturing step may be carried out from the flue gas that is used at the step of cullet pre-heating.

According to this embodiment also, the raw materials are charged in the melting tank together with the pre-heated cullet through same inlet mean(s) X (this implies therefore that both type of vitrifiable materials are mixed before charging). Alternatively, the raw materials are charged in the melting tank M independently of the pre-heated cullet, through different inlet mean(s) X.

Preferably, according to this embodiment, the maximum temperature of the cullet at the step of cullet pre-heating is 450°C. This allows to avoid clogging issues.

According to an embodiment, the step of cullet pre-heating may be carried out in at least one cullet pre-heater, for example, of the type of one of those described in US5526580 or DE3716687.

Advantageously, the at least one cullet pre-heater may be located at upstream part of the melting tank, either in the width of said tank or laterally in its length. Advantageously, the step of cullet pre-heating may be carried out in at least two cullet pre-heaters located, for example, at upstream part of melting tank, in its width or laterally in its length on both sides. For example, the step of cullet pre-heating may be carried out in four cullet pre-heaters located at upstream part of the melting tank, distributed in its width or laterally in its length (for example, two on each side). For example also, the step of cullet pre-heating may be carried out in six cullet pre-heaters located at upstream part of the melting tank, in its width or laterally in its length (for example, three on each side), or also in eight cullet pre-heaters located at upstream part of the melting tank, in its width or laterally in its length (for example, four on each side).

According to another advantageous embodiment of the invention, the process comprises further a step of pre-melting at least a part of the cullet in an auxiliary melting tank and flowing the pre-melted cullet to the melting tank (then called the "main melting tank"). According to this embodiment, the part of the cullet to be pre-melted is charged in the auxiliary melting tank and the remaining part of the cullet (not pre-melted), if any, is charged in the main melting tank. This embodiment has the advantage to prevent from lack of availability of good quality cullet as it allows, in the process of the invention, to use cullet of poorer quality or polluted cullet. Indeed, in this embodiment, the at least part of the cullet is "digested" beforehand in the auxiliary melting tank. For example, metallic compounds present in the cullet can be eliminated in this auxiliary melting tank, by using reductants (like coke or anthracite) to produce molten metal that will separate from the glass melt by decanting at the bottom of the auxiliary melting tank, while the obtained "purified" glass melt could flow from the top towards the main melting tank.

According to this embodiment, the auxiliary melting tank is connected preferably at the upstream part of the main melting tank M, and more preferably, as upstream as possible of the main melting tank M.

Also according to this embodiment of the invention, only a part of the cullet is pre-melted in the auxiliary melting tank. For example, the part of the cullet that is considered as "polluted" or not sufficiently clean is pre-melted in the auxiliary melting tank and the remaining "clean" part of the cullet is charged in the main melting tank. Alternatively, the total amount of the cullet is pre-melted in the auxiliary melting tank.

Still according to this embodiment of the invention, preferably, the process comprises a step of pre-heating the at least a part of the cullet, at least partially by recovering heat from the furnace 1, before charging it in the auxiliary melting tank.

One example of an auxiliary melting tank, suitable in present embodiment, is described in patent application EP2137115A1.

According to another advantageous embodiment of the invention, the raw materials comprise less than 25% in weight of carbonate compounds. By "carbonate compounds", it is meant for example alkali carbonates and alkaline earth carbonates. Preferably, the raw materials comprise less than 20% in weight of carbonate compounds, and more preferably less than 10%, and even less than 5%. The raw materials may be advantageously free of any carbonate compound.

This embodiment is advantageous as it allows to reduce the part of CO₂ emission occurring from the decarbonization of raw materials, compared to classical glass meting process where sodium carbonate Na₂CO₃, limestone CaCO₃ and dolomite CaMg(CO₃)₂ are generally essentially used as sources of sodium, calcium and magnesium. According to this embodiment, the alkali and alkaline earth sources may advantageously be present, at least partially, in the form of oxides or hydroxides such as CaO, CaO.MgO (dolime), Ca(OH)₂, Mg(OH)₂, NaOH, KOH.

According to a very preferred embodiment of the invention, the process for melting vitrifiable materials to produce flat glass comprises the steps of :
- providing a furnace comprising :
   (i) a main melting tank M comprising at least an upstream zone Z1 covered by a crown C1 and equipped with electrical heating means 2; a downstream zone Z2 covered by a crown C2 and equipped with combustion heating means 3 and a transition zone T between crown C1 and crown C2;
   (ii) an auxiliary melting tank,
   (iii) a fining tank F covered by a crown C4 and equipped with oxy-combustion heating means 3',
   (iv) a neck N covered by a crown C3 and separating the main melting tank M and the fining tank F,
   (v) at least one inlet mean X located at the main melting tank M;
   (vi) an outlet mean O located downstream of the fining tank F; and
   (vii) at least an extraction mean of flue gas located at the at least one upstream zone Z1;
   said furnace having the height H1 of the crown C1 defined by : H1 ≤ 0.75*H2; H2 being the height of the crown C2, the length L1 of the at least one upstream zone Z1 defined by : 0.25*(L1+L2) ≤ L1 ≤ 0.8*(L1+L2); L2 being the length of the downstream zone Z2, and the length LT of said transition zone T defined by : LT ≤ 0.2*(L1+L2),
- charging the vitrifiable materials in the main melting tank M with the at least one inlet mean and/or in the auxiliary melting tank, said vitrifiable materials comprising (i) raw materials with less than 25% in weight of carbonate compounds and (ii) cullet in an amount of at least 10% in weight of the total amount of vitrifiable materials,
- cullet pre-heating, at least partially by recovering heat from the furnace, before charging said cullet in the main melting tank M and/or in the auxiliary melting tank;
- pre-melting at least a part of the cullet in the auxiliary melting tank and flowing the pre-melted cullet to the main melting tank M;
- melting the vitrifiable materials in the main melting tank M with the heating means 2;3 ;
- fining the melt in the fining tank F by heating with the oxy-combustion heating means 3' alimented with gas and/or hydrogen;
- flowing the melt from the fining tank F to a working zone trough the outlet mean O;
- capturing CO₂ from flue gas, said flue gas having a CO₂ concentration of at least 35%;
with the electrical input fraction ranging from 30% to 85% and with the step of capturing CO₂ from flue gas comprising step(s) of compression and/or dehydration.

All previously described specific embodiments related to each step of the process of the invention applies to this last very preferred embodiment.

The person skilled in the art realizes that the present invention is by no means limited to the preferred embodiments described above. On the contrary, many modifications and variations are possible within the scope of the appended claims.

## Claims

1. Process for melting vitrifiable materials to produce flat glass, comprising the steps of :
- providing a furnace 1 comprising :
(i) a melting tank M comprising at least an upstream zone Z1 covered by a crown C1 and equipped with electrical heating means 2; a downstream zone Z2 covered by a crown C2 and equipped with combustion heating means 3 and a transition zone T between crown C1 and crown C2;
(ii) a fining tank F covered by a crown C4 and equipped with oxy-combustion heating means 3',
(iii) a neck N covered by a crown C3 and separating the melting tank M and the fining tank F,
(iv) at least one inlet mean X located at the melting tank M;
(v) an outlet mean O located downstream of the fining tank F; and
(vi) at least an extraction mean of flue gas located at the at least one upstream zone Z1;
said furnace having the height H1 of the crown C1 defined by : H1 ≤ 0.75*H2; H2 being the height of the crown C2, the length L1 of the at least one upstream zone Z1 defined by : 0.25*(L1+L2) ≤ L1 ≤ 0.8*(L1+L2); L2 being the length of the downstream zone Z2, and the length LT of said transition zone T defined by : LT ≤ 0.2*(L1+L2),
- charging the vitrifiable materials comprising raw materials and cullet in the melting tank M with the at least one inlet mean X, the amount of cullet being at least 10% in weight of the total amount of vitrifiable materials;
- melting the vitrifiable materials in the melting tank M with the heating means 2;3 ;
- fining the melt in the fining tank F by heating with the oxy-combustion heating means 3' alimented with gas and/or hydrogen;
- flowing the melt from the fining tank F to a working zone trough the outlet mean O;
- capturing CO₂ from flue gas, said flue gas having a CO₂ concentration of at least 35%;
with the electrical input fraction ranging from 30% to 85% and with the step of capturing CO₂ from flue gas comprising step(s) of compression and/or dehydration.

2. Process for melting vitrifiable materials according to the preceding claim, **characterized in that** the amount of cullet is at least 30% in weight of the total amount of vitrifiable materials.

3. Process for melting vitrifiable materials according to the preceding claims, **characterized in that** the oxy-combustion heating means are alimented with at least 50% hydrogen and preferably, at least 80% hydrogen.

4. Process for melting vitrifiable materials according to the preceding claims, **characterized in that** said flue gas has a CO₂ concentration of at least 40%.

5. Process for melting vitrifiable materials according to the preceding claim, **characterized in that** said flue gas has a CO₂ concentration of at least 50%.

6. Process for melting vitrifiable materials according to the preceding claims, **characterized in that** the step of capturing CO₂ from flue gas consists essentially in step(s) of compression and/or dehydration.

7. Process for melting vitrifiable materials according to the preceding claims, **characterized in that** it comprises further a step of eliminating acidic components from said flue gas.

8. Process for melting vitrifiable materials according to the preceding claim, **characterized in that** the step of eliminating acidic components from said flue gas is prior or concurrent to the step of capturing CO₂.

9. Process for melting vitrifiable materials according to the preceding claims, **characterized in that** it comprises further a step of cullet pre-heating, at least partially by recovering heat from the furnace, before charging said cullet in the melting tank M.

10. Process for melting vitrifiable materials according to claim 9, **characterized in that** the maximum temperature of cullet at the step of cullet pre-heating is 450°C.

11. Process for melting vitrifiable materials according to the preceding claims, **characterized in that** it comprises further a step of pre-melting at least a part of the cullet in an auxiliary melting tank and flowing the pre-melted cullet to the melting tank M.

12. Process for melting vitrifiable materials according to the preceding claims, **characterized in that** the raw materials comprise less than 25% in weight of carbonate compounds.

## Patentansprüche

1. Verfahren zum Schmelzen von verglasbaren Materialien zur Herstellung von Flachglas, umfassend die Schritte:
- Bereitstellen eines Ofens 1, umfassend:
(i) einen Schmelztank M, umfassend mindestens eine stromaufwärtige Zone Z1, die von einer Krone C1 bedeckt ist und mit elektrischen Heizmitteln 2 ausgestattet ist, eine stromabwärtige Zone Z2, die von einer Krone C2 bedeckt ist und mit Verbrennungsheizmitteln 3 ausgestattet ist, und eine Übergangszone T zwischen der Krone C1 und der Krone C2;
(ii) einen Läutertank F, der mit einer Krone C4 bedeckt ist und mit Sauerstoffverbrennungsheizmitteln 3' ausgestattet ist,
(iii) einen Hals N, der von einer Krone C3 bedeckt ist und den Schmelztank M und den Läutertank F trennt,
(iv) mindestens ein Einlassmittel X, das sich am Schmelztank M befindet;
(v) ein Auslassmittel O, das sich stromabwärts des Läutertanks F befindet; und
(vi) mindestens ein Extraktionsmittel für Rauchgas, das sich in der mindestens einen stromaufwärtigen Zone Z1 befindet;
wobei der Ofen die Höhe H1 der Krone C1 aufweist, die definiert ist durch: H1 ≤ 0,75*H2; wobei H2 die Höhe der Krone C2 ist, die Länge L1 der mindestens einen stromaufwärtigen Zone Z1 definiert ist durch: 0,25*(L1+L2) ≤ L1 ≤ 0,8*(L1+L2); wobei L2 die Länge der stromabwärtigen Zone Z2 ist und die Länge LT der Übergangszone T definiert ist durch: LT ≤ 0,2*(L1+L2),
- Eintragen der verglasbaren Materialien, die Rohstoffe und Glasbruch umfassen, in den Schmelztank M mit dem mindestens einen Einlassmittel X, wobei die Menge an Glasbruch mindestens 10 Gew.-% der Gesamtmenge von verglasbaren Materialien beträgt;
- Schmelzen der verglasbaren Materialien in dem Schmelztank M mit den Heizmitteln 2; 3;
- Läutern der Schmelze in dem Läutertank F durch Erhitzen mit den mit Gas und/oder Wasserstoff gespeisten Sauerstoffverbrennungsheizmitteln 3';
- Ausfließenlassen der Schmelze aus dem Läutertank F in eine Bearbeitungszone durch das Auslassmittel O;
- Abfangen von CO₂ aus Rauchgas, wobei das Rauchgas eine CO₂-Konzentration von mindestens 35 % aufweist;
wobei der elektrische Eingangsanteil im Bereich von 30 % bis 85 % liegt und wobei der Schritt des Abfangens von CO₂ aus Rauchgas (einen) Schritt(e) der Kompression und/oder Dehydratisierung umfasst.

2. Verfahren zum Schmelzen von verglasbaren Materialien nach dem vorhergehenden Anspruch, **dadurch gekennzeichnet, dass** die Menge an Glasbruch mindestens 30 Gew.-% der Gesamtmenge von verglasbaren Materialien beträgt.

3. Verfahren zum Schmelzen von verglasbaren Materialien nach den vorhergehenden Ansprüchen, **dadurch gekennzeichnet, dass** die Sauerstoffverbrennungsheizmittel mit mindestens 50 % Wasserstoff und vorzugsweise mindestens 80 % Wasserstoff gespeist werden.

4. Verfahren zum Schmelzen von verglasbaren Materialien nach den vorhergehenden Ansprüchen, **dadurch gekennzeichnet, dass** das Rauchgas eine CO₂-Konzentration von mindestens 40 % aufweist.

5. Verfahren zum Schmelzen von verglasbaren Materialien nach dem vorhergehenden Anspruch, **dadurch gekennzeichnet, dass** das Rauchgas eine CO₂-Konzentration von mindestens 50 % aufweist.

6. Verfahren zum Schmelzen von verglasbaren Materialien nach den vorhergehenden Ansprüchen, **dadurch gekennzeichnet, dass** der Schritt des Abfangens von CO₂ aus Rauchgas im Wesentlichen aus (einem) Schritt(en) der Kompression und/oder Dehydratisierung besteht.

7. Verfahren zum Schmelzen von verglasbaren Materialien nach den vorhergehenden Ansprüchen, **dadurch gekennzeichnet, dass** es ferner einen Schritt des Beseitigens von sauren Komponenten aus dem Rauchgas umfasst.

8. Verfahren zum Schmelzen von verglasbaren Materialien nach dem vorhergehenden Anspruch, **dadurch gekennzeichnet, dass** der Schritt des Beseitigens von sauren Komponenten aus dem Rauchgas vor oder gleichzeitig mit dem Schritt des Abfangens von CO₂ erfolgt.

9. Verfahren zum Schmelzen von verglasbaren Materialien nach den vorhergehenden Ansprüchen, **dadurch gekennzeichnet, dass** es ferner einen Schritt des Vorerhitzens von Glasbruch, zumindest teilweise durch Rückgewinnung von Wärme aus dem Ofen, vor dem Eintragen des Glasbruchs in den Schmelztank M umfasst.

10. Verfahren zum Schmelzen von verglasbaren Materialien nach Anspruch 9, **dadurch gekennzeichnet, dass** die Maximaltemperatur von Glasbruch im Schritt des Vorerhitzens von Glasbruch 450 °C beträgt.

11. Verfahren zum Schmelzen von verglasbaren Materialien nach den vorhergehenden Ansprüchen, **dadurch gekennzeichnet, dass** es ferner einen Schritt des Vorschmelzens mindestens eines Teils des Glasbruchs in einem Hilfsschmelztank und des Fließenlassens des vorgeschmolzenen Glasbruchs in den Schmelztank M umfasst.

12. Verfahren zum Schmelzen von verglasbaren Materialien nach den vorhergehenden Ansprüchen, **dadurch gekennzeichnet, dass** die Rohstoffe weniger als 25 Gew.-% Carbonatverbindungen umfassen.

## Revendications

1. Procédé pour la fusion de matières vitrifiables pour produire du verre plat, comprenant les étapes de :
- fourniture d'un four 1 comprenant :
(i) un réservoir de fusion M comprenant au moins une zone amont Z1 recouverte par une couronne C1 et munie de moyens de chauffage électrique 2 ; une zone aval Z2 recouverte par une couronne C2 et munie de moyens de chauffage par combustion 3 et une zone de transition T entre la couronne C1 et couronne C2 ;
(ii) un réservoir d'affinage F recouvert par une couronne C4 et équipé de moyens de chauffage par oxycombustion 3',
(iii) une goulotte N recouverte par une couronne C3 et séparant le réservoir de fusion M et le réservoir d'affinage F,
(iv) au moins un moyen d'entrée X situé au niveau du réservoir de fusion M ;
(v) un moyen de sortie O situé en aval du réservoir d'affinage F ; et
(vi) au moins un moyen d'extraction de gaz de combustion situé au niveau de l'au moins une zone amont 21 ;
ledit four ayant la hauteur H1 de la couronne C1 définie par : H1 ≤ 0,75*H2 ; H2 étant la hauteur de la couronne C2, la longueur L1 de l'au moins une zone amont 21 définie par : 0,25*(L1+L2) ≤ L1 ≤ 0,8*(L1+L2) ; L2 étant la longueur de la zone aval Z2, et la longueur LT de ladite zone de transition T définie par : LT ≤ 0,2*(L1+L2),
- chargement des matières vitrifiables comprenant des matières premières et du calcin dans le réservoir de fusion M avec l'au moins un moyen d'entrée X, la quantité de calcin étant d'au moins 10 % en poids de la quantité totale de matières vitrifiables ;
- fusion des matières vitrifiables dans le réservoir de fusion M avec les moyens de chauffage 2 ; 3 ;
- affinage de la masse fondue dans le réservoir d'affinage F par chauffage avec les moyens de chauffage 3' par oxycombustion alimentés avec du gaz et/ou de l'hydrogène ;
- écoulement de la masse fondue du réservoir d'affinage F vers une zone de travail en passant par le moyen de sortie O ;
- capture de CO₂ du gaz de combustion, ledit gaz de combustion ayant une concentration en CO₂ d'au moins 35 % ;
la fraction d'entrée électrique se situant dans la plage de 30 % à 85 % et avec l'étape de capture du CO₂ de gaz de combustion comprenant une ou plusieurs étape(s) de compression et/ou de déshydratation.

2. Procédé pour la fusion de matières vitrifiables selon la revendication précédente, **caractérisé en ce que** la quantité de calcin est d'au moins 30 % en poids de la quantité totale de matières vitrifiables.

3. Procédé pour la fusion de matières vitrifiables selon les revendications précédentes, **caractérisé en ce que** les moyens de chauffage par oxycombustion sont alimentés avec au moins 50 % d'hydrogène et de préférence, au moins 80 % d'hydrogène.

4. Procédé pour la fusion de matières vitrifiables selon les revendications précédentes, **caractérisé en ce que** ledit gaz de combustion a une concentration en CO₂ d'au moins 40 %.

5. Procédé pour la fusion de matières vitrifiables selon la revendication précédente, **caractérisé en ce que** ledit gaz de combustion a une concentration en CO₂ d'au moins 50 %.

6. Procédé pour la fusion de matières vitrifiables selon les revendications précédentes, **caractérisé en ce que** l'étape de capture de CO₂ du gaz de combustion est constituée essentiellement d'une ou plusieurs étapes de compression et/ou de déshydratation.

7. Procédé pour la fusion de matières vitrifiables selon les revendications précédentes, **caractérisé en ce qu'**il comprend en outre une étape d'élimination de composants acides dudit gaz de combustion.

8. Procédé pour la fusion de matières vitrifiables selon la revendication précédente, **caractérisé en ce que** l'étape d'élimination de composants acides dudit gaz de combustion est avant ou en même temps que l'étape de capture de CO₂.

9. Procédé pour la fusion de matières vitrifiables selon les revendications précédentes, **caractérisé en ce qu'**il comprend en outre une étape de préchauffage de calcin, au moins en partie par récupération de chaleur du four, avant le chargement dudit calcin dans le réservoir de fusion M.

10. Procédé pour la fusion de matières vitrifiables selon la revendication 9, **caractérisé en ce que** la température maximale du calcin au niveau de l'étape de préchauffage de calcin est de 450 °C.

11. Procédé pour la fusion de matières vitrifiables selon les revendications précédentes, **caractérisé en ce qu'**il comprend en outre une étape de pré-fusion d'au moins une partie du calcin dans un réservoir de fusion auxiliaire et d'écoulement du calcin pré-fondu vers le réservoir de fusion M.

12. Procédé pour la fusion de matières vitrifiables selon les revendications précédentes, **caractérisé en ce que** les matières premières comprennent moins de 25 % en poids de composés carbonates.
